# FASCICULE DE BREVET EUROPEEN

(11) **EP 2 304 559 B1**
(45) Date de publication et mention de la délivrance du brevet: **29.05.2019**
(21) Numéro de dépôt: 09793916.9
(22) Date de dépôt: 26.06.2009
(51) Int. Cl.: G06F 9/445, G07F 7/10

(54) **PROCÉDÉ DE BASCULEMENT ENTRE DEUX VERSIONS D'UNE MÊME APPLICATION AU SEIN D'UN DISPOSITIF DE TRAITEMENT DE L'INFORMATION ET LEDIT DISPOSITIF**
VERFAHREN ZUM DIREKTEN UMSCHALTEN ZWISCHEN ZWEI VERSIONEN DERSELBEN ANWENDUNG IN EINER INFORMATIONSVERARBEITUNGSVORRICHTUNG UND BESAGTE VORRICHTUNG
METHOD FOR SWAPPING BETWEEN TWO VERSIONS OF A SAME APPLICATION WITHIN AN INFORMATION PROCESSING DEVICE, AND SAID DEVICE

(30) Priorité: 26.06.2008 FR 0854252
(43) Date de publication de la demande: 06.04.2011
(73) Titulaire: Idemia Identity & Security France, 92400 Courbevoie (FR)
(72) Inventeur: PEPIN, Cyrille, F-75015 Paris (FR); GONCALVES, Louis-Philippe, F-75015 Paris (FR); GUIBERT, Stéphane, F-75015 Paris (FR); VERBRIGGHE, Vincent, F-75015 Paris (FR)
(74) Mandataire: Cabinet Le Guen Maillet
(86) Numéro de dépôt international: PCT/EP2009/058014
(87) Numéro de publication internationale: WO 2010/003832

(56) Documents cités:
- WO-A-01/14968
- US-A- 5 359 730
- US-A- 5 732 275

## Description

La présente invention concerne le domaine des dispositifs de traitement de l'information sécurisés comme, par exemple, les cartes à puce. Plus particulièrement, l'invention concerne le moyen de mettre à jour une application contenue dans une mémoire morte de type ROM (*Read Only Memory* en anglais) d'un tel dispositif.

Il est connu de fournir des cartes à puce, par exemple dans le domaine bancaire, dont les applications sont stockées en mémoire morte. Il s'agit de renforcer la sécurité de ces dispositifs de traitement de l'information en rendant inaltérables les applications exécutables embarquées.

WO0114968 est une example d'un système d'information avec un moyen de basculement permettant de changer l'application. Ce système est donc pas adapté pour etre utilisé dans une carte à puce.

Bien qu'avantageuse au niveau de la sécurité, cette façon de faire pose un problème pour réaliser une migration d'une version d'une application embarquée. En effet, ces dispositifs fonctionnent généralement par coopération avec un système de traitement d'information avec lequel ils interagissent. Dans le cas des cartes à puce bancaires, elles interagissent avec les terminaux de paiement et à travers ceux-ci avec le système d'information bancaire.

Quand ce système évolue, il est nécessaire de changer toutes les cartes à puce de l'ensemble des clients pour réaliser la migration. Ce changement prend nécessairement du temps pendant lequel le système d'information doit être capable de gérer des cartes de l'ancienne génération et celles de la nouvelle génération qui sont déployées. Ce n'est que lorsque toutes les cartes ont été mises à jour qu'il est possible de basculer le système d'information sur la nouvelle génération d'application.

L'invention vise à résoudre les problèmes précédents en proposant un dispositif de traitement d'information possédant en mémoire morte deux versions d'une application. Les deux versions ont un même identifiant. Le dispositif est doté d'un moyen de commander un basculement entre ces deux versions de façon à ce que la version de l'application exécutée en réponse à une invocation de l'identifiant de l'application change.

De cette façon, il est possible de diffuser des dispositifs de traitement d'informations, tels que des cartes à puce dotées d'au moins deux versions d'une même application. Il est possible depuis le système de traitement de l'information de provoquer le basculement sur la nouvelle version de l'application sans nécessiter de diffuser un nouveau dispositif. De plus, les différentes versions de l'application étant préférentiellement stockées en mémoire morte, la sécurité des applications n'est pas compromise.

D'autre part, il est possible de commencer le déploiement de nouvelles cartes avant que le système de traitement de l'information n'ait été mis à jour. Ensuite seulement, on provoque le basculement, lorsque le système est prêt.

L'invention concerne un dispositif de traitement de l'information comprenant un moyen de stockage de l'information dans une mémoire morte ; une pluralité d'applications stockées dans le moyen de stockage de l'information en mémoire morte ; un système d'exploitation comprenant un ensemble de commandes, dont un moyen d'invocation d'une application parmi la pluralité d'applications, ladite application étant identifiée par un identifiant d'application ; au moins deux applications parmi la pluralité associée à un même identifiant d'application et des moyens de basculement permettant de changer l'application effectivement invoquée lors d'un appel des moyens d'invocation à l'aide de cet identifiant donné, parmi les applications associées à un identifiant donné.

Selon un mode particulier de réalisation de l'invention, le dispositif comprenant un second moyen de stockage de l'information en mémoire réinscriptible, les moyens d'invocation d'une application utilisant l'identifiant associé à une application pour déterminer une structure de données contenant une référence sur l'application à invoquer dans la mémoire réinscriptible, les moyens de basculement comprennent des moyens de copier dans la structure de données un ensemble de données contenant une référence à la nouvelle application devant être invoquée au moyen de l'identifiant.

Selon un mode particulier de réalisation de l'invention, le dispositif comprend en mémoire, pour chacune des applications associées à un identifiant donné, un exemplaire de la structure de données devant être copié par les moyens de basculement.

Selon un mode particulier de réalisation de l'invention, les applications étant stockées dans la mémoire morte au sein d'une structure hiérarchique, les structures de données devant être copiées par les moyens de basculement peuvent se situer à différents niveaux de la structure hiérarchique permettant de basculer plusieurs applications de manière liée.

Selon un mode particulier de réalisation de l'invention, les structures de données stockées au sein de la structure hiérarchique contiennent un paramètre de basculement permettant de définir la politique de basculement d'une application lorsque le basculement est initié après invocation d'une autre application.

Selon un mode particulier de réalisation de l'invention, les moyens de basculement sont implémentés par surcharge d'une commande existante parmi l'ensemble de commandes du système d'exploitation.

Selon un mode particulier de réalisation de l'invention, les moyens de basculement sont implémentés par ajout d'une commande supplémentaire parmi l'ensemble de commandes du système d'exploitation.

L'invention concerne également un procédé de basculement, au sein d'un dispositif de traitement de l'information comprenant un moyen de stockage de l'information dans une mémoire morte, un second moyen de stockage en mémoire réinscriptible, une pluralité d'applications stockées dans le moyen de stockage de l'information en mémoire morte et un système d'exploitation comprenant un ensemble de commandes dont un moyen d'invocation d'une application parmi la pluralité d'applications, ladite application étant identifiée par un identifiant d'application, les moyens d'invocation d'une application utilisant l'identifiant associé à une application pour déterminer une structure de données contenant une référence sur l'application à invoquer, ladite structure de données étant dans la mémoire réinscriptible, qui comprend une étape d'invocation d'une application parmi la pluralité identifiée par son identifiant d'application ; le dispositif comprenant au moins deux applications associées à cet identifiant, chacune de ces applications étant associée à un exemplaire de la structure de données, une étape d'invocation d'une commande de basculement comprenant une étape de recopie de l'exemplaire de la structure de données associée à la nouvelle application sur la structure de données servant à l'invocation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale d'un système bancaire avec deux générations d'applications ;
La Fig. 2 illustre le mécanisme d'invocation d'une application au sein d'une carte à puce ;
La Fig. 3 illustre le mécanisme de l'invention selon un exemple de réalisation ;
La Fig. 4 illustre la structure des informations de configuration d'une application ;
La Fig. 5 illustre la structure de fichier dans un premier exemple de réalisation du basculement ;
La Fig. 6 illustre la structure de fichier dans un second exemple de réalisation du basculement ;
La Fig. 7 illustre la structure de fichier dans un troisième exemple de réalisation du basculement ;
La Fig. 8 illustre l'architecture logicielle d'un exemple de réalisation de l'invention.

L'invention s'intéresse au mécanisme de mise à jour d'une application stockée en mémoire morte au sein d'un dispositif de traitement de l'information. En particulier, ce dispositif peut être une carte à puce dans le domaine bancaire, mais l'invention peut être appliquée dans d'autres domaines impliquant des dispositifs de traitement de l'information en mémoire morte, par exemple dans le domaine des cartes contenant le dossier médical du porteur ou autres.

Dans des dispositifs de traitement de l'information conventionnels, tels que des ordinateurs, les parties applicatives sont généralement stockées dans des espaces de mémoires réinscriptibles. De ce fait, lorsque l'on souhaite mettre à jour une application il est possible de modifier, voire même de changer totalement, le code représentant cette application dans la mémoire du dispositif. Ici, le terme mémoire est utilisé au sens large et peut désigner tout dispositif de stockage d'information et en particulier des disques magnétiques connus sous le terme de disque dur.

Dans des domaines nécessitant un haut degré de sécurité, en particulier le domaine bancaire, mais aussi le domaine médical, on utilise couramment des dispositifs de traitement de l'information où les applications sont stockées en mémoire morte. Ces dispositifs peuvent être, par exemple, des cartes à puce comme les cartes bancaires ou encore les cartes connues sous le nom de carte « vitale » identifiant un usager du système de soin français.

Du fait que les applications sont dans une mémoire morte, il n'est pas possible, une fois que le dispositif est créé, de changer le contenu de la mémoire et en particulier de changer le code relatif à une application donnée. Cela implique qu'une mise à jour nécessite un changement du dispositif de traitement de l'information. Cette contrainte est lourde et coûteuse lors du déploiement d'une nouvelle solution.

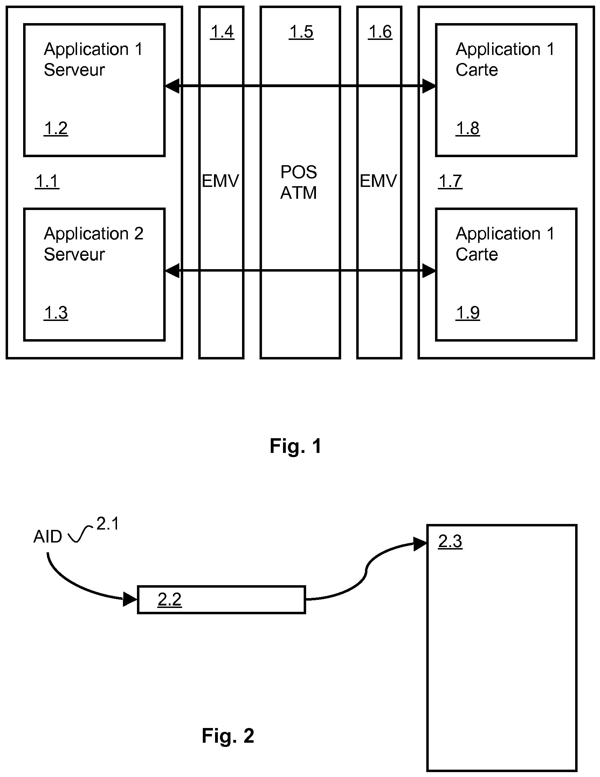

La Fig. 1 illustre l'architecture d'un système de traitement de l'information dans le domaine bancaire lors d'une migration. Ce système implique d'une part un serveur bancaire 1.1. Ce serveur est connecté à un terminal de paiement ou POS (*Point Of Service* en anglais) ou un distributeur de paiement ou ATM (*Automated Teller Machine* en anglais) 1.5. Lors d'une transaction, ce terminal 1.5 est lui-même connecté à une carte à puce 1.7. Les communications entre la carte 1.7 et le terminal 1.5 d'une part, ainsi qu'entre le terminal 1.5 et le serveur bancaire 1.1 d'autre part, se font par l'intermédiaire du protocole EMV (Europay, Mastercard, Visa) 1.4 et 1.6. Via ce protocole, les applications serveurs 1.2 et 1.3 peuvent respectivement communiquer avec les applications 1.8 et 1.9 de la carte à puce.

Lorsque le porteur de la carte insère celle-ci dans le terminal, il s'ensuit un certain nombre d'opérations permettant la mise en service de l'application. Celles-ci comprennent des étapes d'authentification du porteur et de la carte que nous ne détaillerons pas dans le présent document.

La Fig. 2 détaille le mécanisme impliqué dans l'invocation d'une application au sein de la carte. L'application est identifiée par un identifiant AID (pour *Application ID* en anglais) 2.1. Cet identifiant permet de référencer une structure de données de configuration d'application 2.2. Cette structure de données contient un ensemble de données, dont une référence sur l'application proprement dite 2.3. L'invocation d'une application 2.3 implique donc d'identifier la structure de données de configuration d'application liée à son identifiant AID. Le contexte d'exécution est configuré à l'aide des informations contenues dans cette structure. L'application 2.3 peut alors être exécutée.

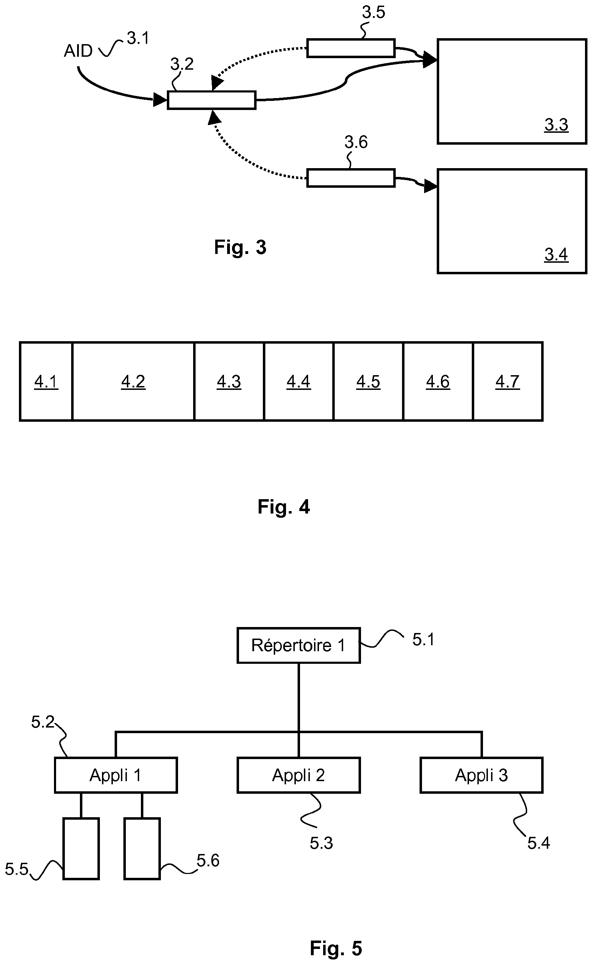

La Fig. 3 illustre le schéma de base de l'invention. Celui-ci consiste à stocker dans la mémoire morte du dispositif de traitement de l'information deux versions de la même application 3.3 et 3.4. Ces deux versions correspondent, par exemple, à une version courante et à une nouvelle version de l'application dans le cadre d'une migration de cette version courante à cette nouvelle version. Pour chacune de ces versions d'application, on stocke également une structure de données de configuration d'applications correspondante 3.5 et 3.6. Chacune de ces structures fait référence à la version correspondante de l'application 3.3 et 3.4. Ces applications possèdent un seul et même identifiant AID, 3.1, pour les deux versions d'application 3.3 et 3.4. Cet identifiant 3.1 permet d'identifier une structure de données de configuration d'application 3.2 permettant de configurer le contexte de l'application. Selon l'invention, cette structure 3.2 est, elle, stockée dans une partie inscriptible de la mémoire du dispositif de traitement de l'information.

De cette façon, il est possible de recopier le contenu d'une des structures de données 3.5 ou 3.6 dans la structure 3.2. Si le contenu de la structure de données 3.2 associée à l'identifiant AID de l'application contient les données de la structure 3.5 correspondant à la version 3.3 de l'application, c'est alors celle-ci qui sera invoquée lors de la procédure d'invocation. On dit que la version 3.3 de l'application est active. Il n'y a alors aucun moyen d'invoquer la version 3.4 de l'application.

Si on effectue une opération de basculement consistant à venir écrire dans la structure de données 3.2 le contenu de la structure 3.6 correspondant à l'application 3.4 on vient basculer la version d'application active. Lors d'une activation suivante, c'est maintenant la version 3.4 de l'application qui est invoquée et qui est donc active.

On voit donc que par ce mécanisme utilisant une structure de données de configuration d'application située en mémoire inscriptible et deux versions de l'application, avec leurs deux versions de structure de données de configuration d'information associées, on peut permettre d'opérer un basculement entre les deux versions d'application. Ces versions d'application étant stockées en mémoire morte, on garde le même niveau de sécurité que pour les dispositifs de traitement de l'information n'implémentant pas l'invention.

La Fig. 4 représente la structure de données de configuration d'application dans le cadre de l'exemple de réalisation de l'invention, c'est-à-dire le cadre des systèmes de traitement d'information bancaire selon le standard EMV.

La structure contient alors une partie 4.1 sur un octet codant le type d'application. Une seconde partie 4.2 sur 2 octets permet d'activer ou de désactiver certaines fonctionnalités ou options de l'application. Nous verrons plus bas que cette partie permet d'implémenter des options relatives à l'opération de basculement.

Une troisième partie 4.3 sur un octet stocke l'identifiant du fichier de traces permettant de préciser où est stocké le journal des transactions. Il est possible de garder le même fichier de traces ou d'en changer lors du basculement.

Une quatrième partie 4.4 sur quelques octets permet de définir certaines caractéristiques fonctionnelles du standard EMV.

Une cinquième partie 4.5 permet de définir les commandes EMV disponibles pour cette application. On peut ainsi interdire ou autoriser certaines commandes EMV.

Les 2 octets suivants 4.6 et 4.7 permettent de lire toutes les données internes sur lesquelles se base l'application pour fonctionner. Le premier octet 4.6 est un pointeur ou un identifiant du premier fichier ou groupe de données internes de l'application.

Le second octet 4.7 contient le nombre de fichiers ou de groupes de données internes de l'application. L'opération de basculement permet de garder certains de ces fichiers ou groupes de données internes et d'en changer d'autres ou de tous les changer si besoin est.

Dans le contexte bancaire de la norme EMV, les applications sont présentes au sein du dispositif de traitement de l'information sous la forme d'une structure de fichiers hiérarchique au sein de répertoires. Un exemple d'une telle structure est donné Fig. 5. On y voit qu'au sein d'un répertoire 5.1 sont placées trois applications 5.2, 5.3 et 5.4. D'autres répertoires peuvent être présents au sein du dispositif. Pour permettre son invocation, chaque application doit être dotée d'une structure de données de configuration 5.5. Une telle structure peut être directement rattachée à l'application à laquelle elle est relative comme sur le dessin, la structure 5.5 relative à l'application 5.2. La seconde structure 5.6 est aussi rattachée à la même application 5.2, mais dans une autre version. Elle permet donc le basculement entre les deux versions de l'application 5.2. Les structures 5.5 et 5.6 correspondent aux structures 3.5 et 3.6 de la Fig. 3. Le basculement proprement dit est alors provoqué par l'appel à une fonction de basculement après avoir invoqué l'application 5.2. On considère dans cet exemple que les applications 5.3 et 5.4 ne peuvent pas basculer.

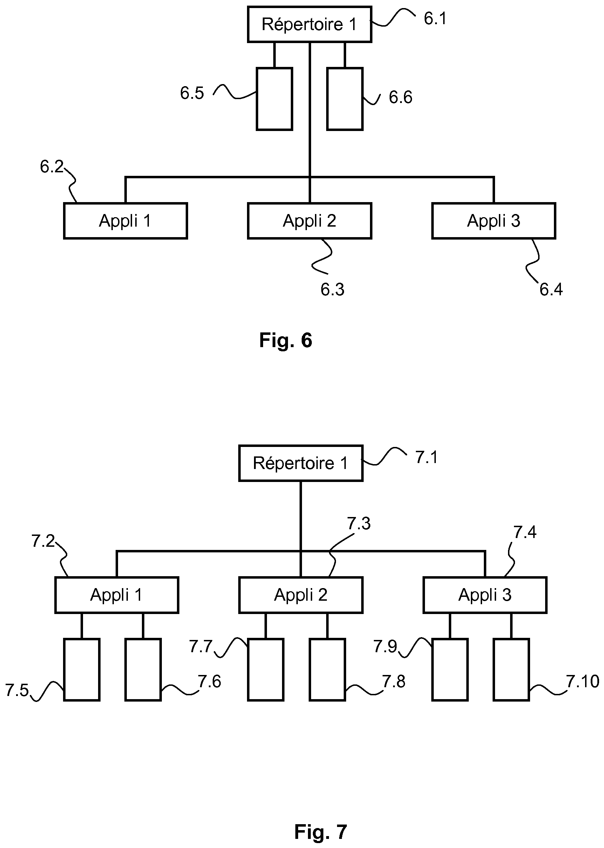

La Fig. 6 quant à elle représente une même structure de répertoire 6.1 comprenant trois applications 6.2, 6.3 et 6.4. A la différence de l'exemple de la Fig. 5, ici les structures de données de configuration d'applications 6.5 et 6.6 sont liées au répertoire et non pas directement à une application donnée. Dès lors, le basculement de la structure de données de configuration 6.5 à celle référencée 6.6 provoque le basculement des trois applications. Ce basculement est lié, il n'est pas possible dans cet exemple de provoquer le basculement individuel d'une seule des applications du répertoire. On voit donc que l'on peut gérer la cible d'un basculement en choisissant le niveau dans la hiérarchie des répertoires auquel on place les structures de données de configuration des applications.

La Fig. 7 illustre quant à elle une possibilité supplémentaire de souplesse dans la définition de la cible d'un basculement. Dans ce mode de réalisation, la structure de données de configuration d'applications contient un paramètre de basculement. Ce paramètre permet de définir si le basculement de cette application se fait « seul », « en groupe » ou encore « seul ou en groupe ». Ce paramètre permet de définir la politique de basculement d'une application lorsque le basculement est initié après invocation d'une autre application.

Si la valeur correspond à « seul » pour une application, il n'est possible de basculer cette application que par un appel à la commande de basculement après une invocation de cette application.

Si la valeur correspond à « en groupe », le basculement de l'application est possible par un appel à la commande de basculement après invocation d'une seule des applications.

Si la valeur correspond à « seul ou en groupe » les deux possibilités sont offertes.

Dans l'exemple de la Fig. 7, on considère que la structure 7.5 liée à l'application 7.2 a son paramètre ayant la valeur « seul ou en groupe », la structure 7.7 liée à l'application 7.3 a son paramètre ayant la valeur « en groupe » et la structure 7.9 liée à l'application 7.4 a son paramètre ayant la valeur « seul ». Après invocation de l'application 7.2, un appel de la commande de basculement provoque le basculement de l'application 7.2 par passage de la structure 7.5 à 7.6. Elle provoque également le basculement de l'application 7.3 car la structure associée 7.7 a la valeur « en groupe ». Par contre, elle ne provoque pas le basculement de l'application 7.4 car la structure associée 7.9 a la valeur « seul ».

En jouant donc sur ce paramètre, on peut définir quelles applications vont basculer au sein d'un répertoire en fonction de l'application invoquée préalablement à l'appel de la commande de basculement.

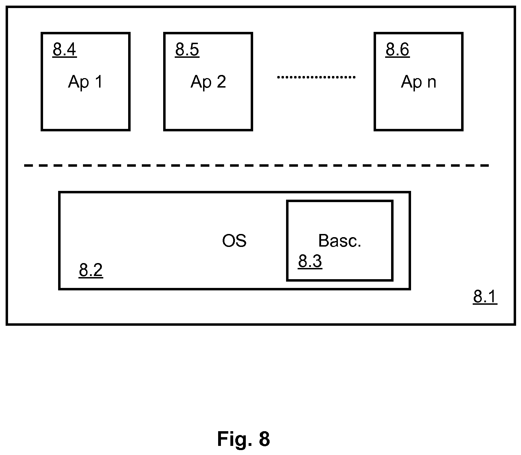

La Fig. 8 illustre l'architecture logicielle du dispositif de traitement de l'information 8.1. Il est composé d'un système d'exploitation 8.2 qui va contenir l'implémentation des commandes et plus particulièrement de la commande de basculement 8.3. Dans une partie applicative sont disposées les applications 8.4, 8.5 et 8.6. Ces applications sont stockées par exemple sous la forme d'une structure hiérarchique déjà décrite. Dans le cadre de l'exemple de réalisation reposant sur la norme bancaire EMV, la commande de basculement 8.3 peut être réalisée sous la forme d'une commande supplémentaire. Cet exemple nécessite par contre que cette nouvelle commande soit connue et donc ajoutée également dans le système de traitement de l'information bancaire côté serveur. Une autre possibilité est de détourner une commande déjà existante et peu utilisée du protocole EMV. Dans l'exemple de réalisation, on a détourné la commande « Card block » ou encore « Application block ». On dit alors que la commande est implémentée par surcharge de la commande existante. La commande devient dans ce cas inaccessible dans sa sémantique habituelle et est remplacée par la commande de basculement qui provoque l'écriture de la structure de données de configuration d'applications comme précédemment décrite.

Grâce à cette commande de basculement, un opérateur d'un ensemble de dispositifs de traitement de l'information selon l'invention peut organiser une opération de migration de façon simple et souple. Dans un premier temps, il diffuse cet ensemble de dispositifs comprenant des applications dans une première version, la version préalable à la migration, et dans une seconde version, la nouvelle version à déployer. Seule la première version est active. Il peut alors faire migrer ses terminaux et ses serveurs de la première version à la seconde. Lorsque c'est fait, il commande le basculement des dispositifs de traitement de l'information. Ce basculement intervient lors d'une transaction. Cette transaction invoque l'application dans sa première version. Le basculement s'opère, mais ne sera effectif que lors d'une nouvelle invocation de la même application, c'est-à-dire du même identifiant AID. Dans un premier temps, la transaction impliquant l'application serveur dans sa première version 1.2 et l'application du dispositif dans sa première version 1.8 se termine. La prochaine transaction impliquera l'application serveur dans sa seconde version 1.3 et l'application du dispositif dans sa seconde version également 1.9. C'est l'application serveur 1.2 qui initie le basculement comme décrit dans la Fig. 1.

## Revendications

1. Dispositif de traitement de l'information étant une carte à puce et comprenant :
- un premier moyen de stockage de l'information dans une mémoire morte ;
- un second moyen de stockage de l'information en mémoire réinscriptible ;
- une pluralité d'applications (8.4, 8.5 et 8.6) stockées dans le premier moyen de stockage de l'information en mémoire morte ;
- un système d'exploitation (8.2) comprenant un ensemble de commandes, dont un moyen d'invocation d'une application parmi la pluralité d'applications, ladite application étant identifiée par un identifiant d'application (2.1), les moyens d'invocation d'une application utilisant l'identifiant associé à une application pour déterminer une structure de données (2.2) dans la mémoire réinscriptible contenant une référence sur l'application à invoquer (2.3), ;
**caractérisé en ce que**, le dispositif comprend en outre :
- au moins une première et une seconde applications (3.3, 3.4), parmi la pluralité, associées à un même identifiant d'application (3.1) ;
- des moyens de basculement (8.3) permettant de changer l'application effectivement invoquée lors d'un appel des moyens d'invocation à l'aide de cet identifiant donné (3.1), parmi les première et seconde applications (3.3, 3.4) associées à un identifiant donné (3.1) et comprenant des moyens de copier dans la structure de données(2.2), à la place d'une structure de donnée de configuration faisant référence à la première application devant être invoquée au moyen de l'identifiant, une structure de donnée de configuration faisant référence à la seconde application devant être invoquée au moyen de l'identifiant, le basculement étant exécuté par surcharge d'une commande existante parmi un ensemble de commandes du système d'exploitation ou étant exécuté par ajout d'une commande supplémentaire parmi l'ensemble de commandes du système d'exploitation.

2. Dispositif selon la revendication 1, **caractérisé en ce que** les structures de données stockées au sein de la structure hiérarchique contiennent un paramètre de basculement permettant de définir la politique de basculement d'une application lorsque le basculement est initié après invocation d'une autre application.

3. Procédé de basculement, dans une carte à puce comprenant un premier moyen de stockage de l'information dans une mémoire morte, un second moyen de stockage en mémoire réinscriptible, une pluralité d'applications (8.4, 8.5 et 8.6) stockées dans le moyen de stockage de l'information en mémoire morte et un système d'exploitation (8.2) comprenant un ensemble de commandes dont un moyen d'invocation d'une application parmi la pluralité d'application, ladite application étant identifiée par un identifiant d'application (2.1), les moyens d'invocation d'une application utilisant l'identifiant associé à une application pour déterminer une structure de données (2.2) contenant une référence sur l'application à invoquer (2.3), ladite structure de données (2.2) étant dans la mémoire réinscriptible, **caractérisé en ce que** au moins une première et une seconde applications (3.3, 3.4), parmi la pluralité, associées à un même identifiant d'application (3.1) et **en ce que** le procédé comporte les étapes de :
- basculer (8.3) pour permettre de changer l'application effectivement invoquée lors d'un appel des moyens d'invocation à l'aide de cet identifiant donné (3.1), parmi les première et seconde applications (3.3, 3.4) associées à un identifiant donné (3.1),
- copier dans la structure de données (2.2), à la place d'une structure de donnée de configuration faisant référence à la première application devant être invoquée au moyen de l'identifiant, une structure de donnée de configuration faisant référence à la seconde application devant être invoquée au moyen de l'identifiant, le basculement étant implémenté par surcharge d'une commande existante parmi un ensemble de commandes du système d'exploitation ou par ajout d'une commande supplémentaire parmi l'ensemble de commandes du système d'exploitation.

## Patentansprüche

1. Informationsverarbeitungsvorrichtung, die eine Chipkarte ist und enthält:
- eine erste Speichereinrichtung der Information in einem Festspeicher;
- eine zweite Speichereinrichtung der Information in einem wiederbeschreibbaren Speicher;
- eine Vielzahl von Anwendungen (8.4, 8.5 und 8.6), die in der ersten Speichereinrichtung der Information im Festspeicher gespeichert sind;
- ein Betriebssystem (8.2), das eine Einheit von Steuerungen enthält, darunter eine Einrichtung zum Aufrufen einer Anwendung unter der Vielzahl von Anwendungen, wobei die Anwendung durch eine Anwendungskennung (2.1) bezeichnet ist, wobei die Einrichtungen zum Aufrufen einer Anwendung die einer Anwendung zugeordnete Kennung verwenden, um eine Datenstruktur (2.2) im wiederbeschreibbaren Speicher zu bestimmen, die einen Bezug auf die aufzurufende Anwendung (2.3) enthält;
**dadurch gekennzeichnet, dass** die Vorrichtung außerdem enthält:
- mindestens eine erste und eine zweite Anwendung (3.3, 3.4) unter der Vielzahl, die einer gleichen Anwendungskennung (3.1) zugeordnet sind;
- Umschalteinrichtungen (8.3), die es ermöglichen, die bei einem Anruf der Aufrufeinrichtungen mittels dieser gegebenen Kennung (3.1) unter den einer gegebenen Kennung (3.1) zugeordneten ersten und zweiten Anwendungen (3.3, 3.4) tatsächlich aufgerufene Anwendung zu ändern, und Einrichtungen enthalten, um anstelle einer Konfigurationsdatenstruktur, die sich auf die erste Anwendung bezieht, die mittels der Kennung aufgerufen werden soll, eine Konfigurationsdatenstruktur in die Datenstruktur (2.2) zu kopieren, die sich auf die zweite Anwendung bezieht, die mittels der Kennung aufgerufen werden soll, wobei das Umschalten durch Überlastung einer existierenden Steuerung unter einer Einheit von Steuerungen des Betriebssystems ausgeführt wird oder durch Hinzufügen einer zusätzlichen Steuerung unter der Einheit von Steuerungen des Betriebssystems ausgeführt wird.

2. Vorrichtung nach Anspruch 1, **dadurch gekennzeichnet, dass** die in der hierarchischen Struktur gespeicherten Datenstrukturen einen Umschaltparameter enthalten, der es ermöglicht, die Umschaltpolitik einer Anwendung zu definieren, wenn das Umschalten nach dem Aufrufen einer anderen Anwendung gestartet wird.

3. Umschaltverfahren in einer Chipkarte, die eine erste Speichereinrichtung der Information in einem Festspeicher, eine zweite Speichereinrichtung der Information in einem wiederbeschreibbaren Speicher, eine Vielzahl von in der ersten Speichereinrichtung der Information im Festspeicher gespeicherten Anwendungen (8.4, 8.5 und 8.6) und ein Betriebssystem (8.2) enthält, das eine Einheit von Steuerungen enthält, darunter eine Einrichtung zum Aufrufen einer Anwendung unter der Vielzahl von Anwendungen, wobei die Anwendung durch eine Anwendungskennung (2.1) gekennzeichnet ist, wobei die Einrichtungen zum Aufrufen einer Anwendung die einer Anwendung zugeordnete Kennung verwenden, um eine Datenstruktur (2.2) zu bestimmen, die einen Bezug auf die aufzurufende Anwendung (2.3) enthält, wobei die Datenstruktur (2.2) sich im wiederbeschreibbaren Speicher befindet, **dadurch gekennzeichnet, dass** mindestens eine erste und eine zweite Anwendung (3.3, 3.4) unter der Vielzahl einer gleichen Anwendungskennung (3.1) zugeordnet sind, und dass das Verfahren die folgenden Schritte enthält:
- Umschalten (8.3), um es zu ermöglichen, die tatsächlich bei einem Anruf der Aufrufeinrichtungen mit Hilfe dieser gegebenen Kennung (3.1) unter den einer gegebenen Kennung (3.1) zugeordneten ersten und der zweiten Anwendungen (3.3, 3.4) aufgerufene Anwendung zu ändern,
- in die Datenstruktur (2.2) anstelle einer Konfigurationsdatenstruktur, die sich auf die erste Anwendung bezieht, die mittels der Kennung aufgerufen werden soll, eine Konfigurationsdatenstruktur zu kopieren, die sich auf die zweite Anwendung bezieht, die mittels der Kennung aufgerufen werden soll, wobei das Umschalten durch Überlastung einer existierenden Steuerung unter einer Einheit von Steuerungen des Betriebssystems oder durch Hinzufügen einer zusätzlichen Steuerung unter der Einheit von Steuerungen des Betriebssystems ausgeführt wird.

## Claims

1. Information processing device being a chip card and comprising:
- a first means for storing information in a read-only memory;
- a second means for storing information in rewritable memory;
- a plurality of applications (8.4,8.5 and 8.6) stored in the first read-only memory information storage means;
- an operating system (8.2) comprising a set of commands, including a means for invoking one application out of the plurality of applications, said application being identified by an application identifier (2.1), the application invocation means using the identifier associated with an application to determine a data structure (2.2) in the rewritable memory containing a reference to the application to be invoked (2.3);
**characterized in that**, the device further comprises:
- at least one first and one second application (3.3, 3.4), out of the plurality, associated with one and the same application identifier (3.1);
- swapping means (8.3) making it possible to change the application effectively invoked in a call to the invocation means using this given identifier (3.1), out of the first and second applications (3.3, 3.4) associated with a given identifier (3.1) and comprising means for copying in the data structure (2.2), in place of a configuration data structure referring to the first application having to be invoked by means of the identifier, a configuration data structure referring to the second application having to be invoked by means of the identifier, the swapping being executed by overload of an existing command out of a set of commands of the operating system or being executed by the addition of an additional command out of the set of commands of the operating system.

2. Device according to Claim 1, **characterized in that** data structures stored in the hierarchical structure contain a swapping parameter making it possible to define the policy for swapping from an application when the swapping is initiated after the invocation of another application.

3. Swapping method, in a chip card comprising a first means for storing information in a read-only memory, a second storage means in rewritable memory, a plurality of applications (8.4, 8.5 and 8.6) stored in the read-only memory information storage means and an operating system (8.2) comprising a set of commands including a means for invoking one application out of the plurality of applications, said application being identified by an application identifier (2.1), the application invocation means using the identifier associated with an application to determine a data structure (2.2) containing a reference to the application to be invoked (2.3), said data structure (2.2) being in the rewritable memory, **characterized in that** at least one first and one second application (3.3, 3.4), out of the plurality, associated with one and the same application identifier (3.1) and **in that** the method comprises the steps of:
- swapping (8.3) to make it possible to change the application effectively invoked in a call from the invocation means using this given identifier (3.1), out of the first and second applications (3.3, 3.4) associated with a given identifier (3.1),
- copying in the data structure (2.2), in place of a configuration data structure referring to the first application having to be invoked by means of the identifier, a configuration data structure referring to the second application having to be invoked by means of the identifier, the swapping being implemented by overload of an existing command out of a set of commands of the operating system or by the addition of an additional command out of the set of commands of the operating system.
